# EUROPEAN PATENT SPECIFICATION

(11) **EP 3 454 307 B1**
(45) Date of publication and mention of the grant of the patent: **03.08.2022**
(21) Application number: 17819865.1
(22) Date of filing: 14.06.2017
(51) Int. Cl.: G07F 19/00

(54) **MONEY PROCESSING SYSTEM**
GELDVERARBEITUNGSSYSTEM
SYSTÈME DE TRAITEMENT D'ARGENT

(30) Priority: 29.06.2016 JP 2016128695
(43) Date of publication of application: 13.03.2019
(73) Proprietor: Glory Ltd., Hyogo 670-8567 (JP)
(72) Inventor: WAKABAYASHI, Nobumichi, Kakogawa-shi Hyogo 675-0019 (JP); OKA, Naoki, Himeji-shi Hyogo 670-8567 (JP)
(74) Representative: Jenkins, Peter David
(86) International application number: PCT/JP2017/021975
(87) International publication number: WO 2018/003505

(56) References cited:
- WO-A1-00/19318
- WO-A1-2014/027683
- WO-A1-2014/208308
- JP-A- 2014 038 473
- JP-A- 2016 028 352
- JP-A- 2016 062 127

## Description

### Technical Field

The present invention relates to a money handling system that supports the operation of a money handling apparatus that performs processing related to money.

### Background Art

Conventionally, various money handling apparatuses, such as teller machines used to perform cash withdrawals and deposits, money change machines that are operated by customers, and lobby cash depositing and dispensing machines, are used in financial institutions and the like. Moreover, money handling systems that support the operation, such as maintenance and inspection, of money handling apparatuses are also used.

In a money handling system disclosed in JP 2016-62127A, a server of a support center sends information of a screen depending on the model and the state of a cash handling machine to a tablet terminal. The information of the screen sent to the tablet terminal is displayed on the tablet terminal. Thus, an operator who does not have a detailed knowledge of a money handling apparatus can efficiently perform the maintenance work appropriate for the model and the state of the apparatus.

WO-A-2014/027683 dislcoses a maintenance system for a cash handling machine which is constructed from: a cash handling machine having a wireless communication-enabled storage medium capable of independent wireless communication with another device, and designed to use data held in the wireless communication-enabled storage medium, to update data for use internally; a server for managing association between information about different models of cash handling machine, and data used by the cash handling machines; and a mobile terminal connectable to the server through the internet, and capable of wireless communication with the wireless communication-enabled storage medium. The wireless terminal connects to the server and, on the basis of the information about different models of cash handling machine, downloads data used by a cash handling machine, then connects to the wireless communication-enabled storage medium, and writes the downloaded data to update the data in the cash handling machine.

### Disclosure of the Invention

### Problem to be Solved by the Invention

Money handling apparatuses installed in financial institutions and the like may vary in their configurations, depending on the branch where an apparatus is installed, and when it was delivered. For example, an optional apparatus may or may not be attached, the type of an optional apparatus may be different, or the apparatus structure or the program configuration may be different. Although the above-described conventional money handling system is capable of providing information depending on the model and the state, this money handling system cannot provide information for individual money handling apparatuses.

The present invention was made to eliminate the above-described problem with conventional techniques, and it is an object to provide a money handling system that can provide appropriate information for individual money handling apparatuses and efficiently support the operation of the money handling apparatuses.

### Means for Solving Problem

To address the above-described problem and achieve the object, the present invention provides a money handling system as recited in claim 1.

With this money handling system, the auxiliary information providing unit stores the auxiliary information in a state in which the auxiliary information is associated with the individual identification information and the state information of a money handling apparatus, and the mobile apparatus acquires the auxiliary information corresponding to the state information and the individual identification information that are notified from the information notification unit, from the auxiliary information providing unit, and displays the acquired auxiliary information. Thus, auxiliary information corresponding to the configuration that differs from one money handling apparatus to another can be displayed on the mobile apparatus. That is to say, it is possible to provide a money handling system that can provide appropriate information for individual money handling apparatuses and efficiently support the operation of the money handling apparatuses.

Moreover, the money handling system further comprises a server configured to perform communication with the mobile apparatus, wherein the auxiliary information providing unit is provided in the server.

With this money handling system, since the auxiliary information providing unit is provided in the server, it is easy to modify and update the auxiliary information, and it is possible to even more appropriately and efficiently support the operation of money handling apparatuses.

Moreover, the auxiliary information providing unit stores apparatus-related data as the auxiliary information, and the apparatus-related data comprises operation support information that explains an operation method or an error recovery method of the money handling apparatus, in a state in which the operation support information is associated with the state information.

With this money handling system, since the information display of the mobile apparatus displays the operation support information corresponding to the state information, it is possible to even more appropriately and efficiently support the operation of money handling apparatuses.

Moreover, the auxiliary information providing unit stores installed-apparatus-related data as the auxiliary information, and the installed-apparatus-related data comprises apparatus configuration information that indicates a configuration of the installed money handling apparatus, in a state in which the apparatus configuration information is associated with the individual identification information.

With this money handling system, the configuration of an installed money handling apparatus can be understood using the apparatus configuration information associated with the individual identification information, and it is therefore possible to provide appropriate information for individual money handling apparatuses and efficiently support the operation of the money handling apparatuses.

Moreover, the auxiliary information providing unit stores maintenance-related data as the auxiliary information, and the maintenance-related data comprises maintenance information regarding maintenance of the installed money handling apparatus, in a state in which the maintenance information is associated with the individual identification information.

With this money handling system, information regarding the maintenance of a money handling apparatus can be understood using the maintenance information associated with the individual identification information, and it is therefore possible to provide appropriate information for individual money handling apparatuses and efficiently support the operation of the money handling apparatuses.

Moreover, according to an embodiment of the present invention, the money handling system further comprises an information editing unit configured to edit the auxiliary information in accordance with the state information and the individual identification information that are notified from the information notification unit, and provide the edited auxiliary information to the mobile apparatus.

With this money handling system, since the information editing unit edits the auxiliary information in accordance with the state information and the individual identification information and provides the edited auxiliary information to the mobile apparatus, even more appropriate and easy-to-understand information can be provided by the mobile apparatus, and it is therefore possible to even more efficiently support the operation of money handling apparatuses.

Moreover, according to an embodiment of the present invention, the state information comprises an error code that indicates the type of an error occurring in the money handling apparatus.

With this money handling system, since the state information comprises an error code, the auxiliary information corresponding to the error code can be displayed on the mobile apparatus, and it is therefore possible to appropriately support the recovery from an error occurring in a money handling apparatus. That is to say, it is possible to provide a money handling system that can even more efficiently support the operation of money handling apparatuses.

Moreover, according to an embodiment of the present invention, the individual identification information comprises a model ID that indicates the model of the money handling apparatus and a serial number of the money handling apparatus.

With this money handling system, since the individual identification information comprises a model ID and a serial number, the auxiliary information corresponding to the model ID and the serial number can be displayed on the mobile apparatus. That is to say, it is possible to provide a money handling system that can provide appropriate information for individual money handling apparatuses and efficiently support the operation of the money handling apparatuses.

Moreover, the money handling apparatus comprises a transmitting unit configured to transmit a signal containing the state information and the individual identification information to the outside, the mobile apparatus comprises a receiving unit configured to receive the signal from the transmitting unit, and the communication between the money handling apparatus and the mobile apparatus is performed through unidirectional communication from the transmitting unit to the receiving unit.

A money handling apparatus that is installed in a financial institution or the like needs a high level of security against hacking and the like. With the above-described money handling system, the communication between the money handling apparatus and the mobile apparatus is performed through unidirectional communication from the transmitting unit of the money handling apparatus to the receiving unit of the mobile apparatus, and this makes it extremely difficult to hack into the money handling apparatus. Thus, the security of the money handling apparatus can be advantageously strengthened.

Moreover, according to an embodiment of the present invention, the communication between the money handling apparatus and the mobile apparatus is performed by sending an optical signal from the transmitting unit to the receiving unit.

With this money handling system, since the communication between the money handling apparatus and the mobile apparatus is performed by sending an optical signal, the transmitting unit and the receiving unit can be advantageously configured using a simple configuration such as an LED and a camera, for example.

Moreover, according to another embodiment of the present invention, the communication between the money handling apparatus and the mobile apparatus is performed by sending a sound wave signal from the transmitting unit to the receiving unit.

With this money handling system, since the communication between the money handling apparatus and the mobile apparatus is performed by sending a sound wave signal, the transmitting unit and the receiving unit can be advantageously configured using a simple configuration such as a loudspeaker and a microphone, for example.

### Effects of Invention

According to the present invention, it is possible to provide a money handling system that can provide appropriate information for individual money handling apparatuses and efficiently support the operation of the money handling apparatuses.

### Brief Description of the Drawings

FIG. 1 is an explanatory diagram illustrating a system configuration and operation of a money handling system.
FIG. 2 is a block diagram illustrating an internal configuration of a money handling apparatus.
FIG. 3 is a block diagram illustrating an internal configuration of a mobile apparatus.
FIG. 4 is a block diagram illustrating an internal configuration of a server.
FIG. 5 illustrates an example of installed-apparatus-related data.
FIG. 6 illustrates an example of maintenance-related data.
FIG. 7 illustrates an example of apparatus-related data.
FIG. 8 is a flow chart illustrating an outline of processing that is performed in the money handling system.
FIG. 9 is a diagram illustrating an outline of data processing that is performed in the money handling system.
FIG. 10 shows an example of a screen that is displayed on the mobile apparatus.
FIG. 11 shows an example of a screen that is displayed on the mobile apparatus.

### Best Mode for Carrying out the Invention

Hereinafter, a preferred embodiment of a money handling system according to the present invention will be described in detail with reference to the appended drawings.

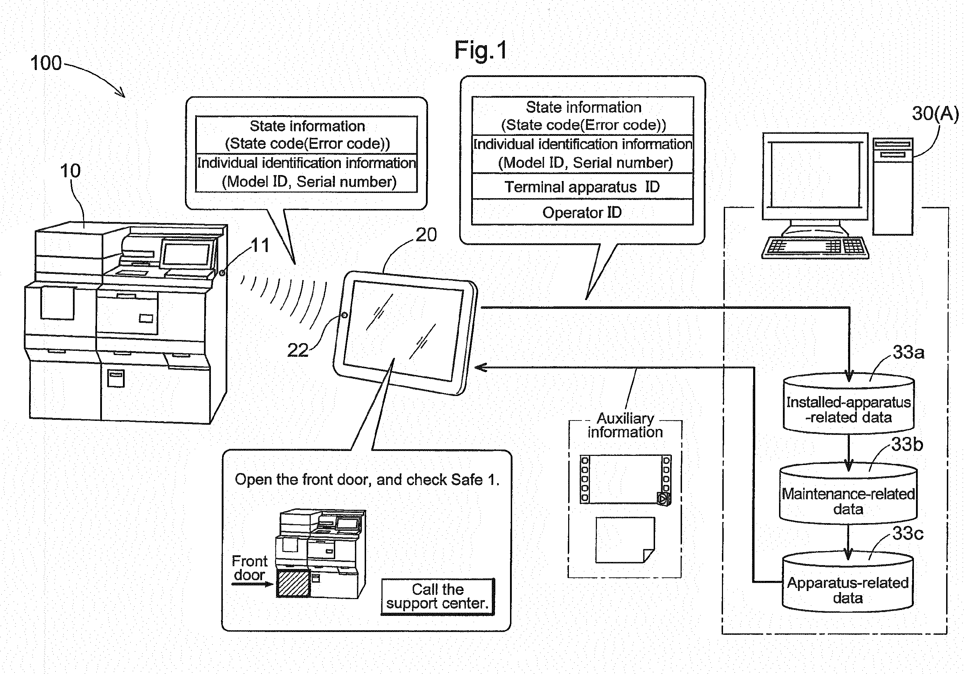

First, an outline of the system configuration and operation of a money handling system 100 will be described in FIG. 1. The money handling system 100 comprises an auxiliary information providing unit A, a money handling apparatus 10, a mobile apparatus 20, and a server 30. In this embodiment, the auxiliary information providing unit A is provided in the server 30.

The money handling apparatus 10 is an apparatus that handles money, such as a teller machine used to perform cash withdrawals and deposits, a money change machine that is operated by a customer, or a lobby cash depositing and dispensing machine. The mobile apparatus 20 is a terminal apparatus that is portable and can display information on a screen thereof. A general-purpose tablet, smartphone, cellphone, notebook computer, or the like can be used as the mobile apparatus 20. The server 30 stores and edits auxiliary information that assists the operation of the money handling apparatus 10, and provides the auxiliary information to the mobile apparatus 20. The server 30 may be provided as a dedicated server for the money handling system 100 or may be provided as a so-called cloud server.

A communication between the money handling apparatus 10 and the mobile apparatus 20 is performed through unidirectional communication from a transmitting unit 11 of the money handling apparatus 10 to a receiving unit 22 of the mobile apparatus 20. A communication between the mobile apparatus 20 and the server 30 is performed via a wireless network such as a wireless LAN.

The money handling system 100 efficiently supports the operation of money handling apparatuses 10 by displaying appropriate auxiliary information for individual money handling apparatuses 10 on the mobile apparatus 20. Here, examples of the auxiliary information comprise moving images, animations, still images, documents, and the like for explaining an operation method, an error recovery method, a parts replacement method, an inspection method, and the like of a money handling apparatus 10.

The manner in which the auxiliary information is displayed on the mobile apparatus 20 is briefly described below. If an abnormality in the lifting operation of a safe, for example, occurs in a money handling apparatus 10, the money handling apparatus 10 transmits state information (state code such as error code) and individual identification information (model ID, serial number) from the transmitting unit 11. When the receiving unit 22 of the mobile apparatus 20 receives the signals from the money handling apparatus 10, the mobile apparatus 20 sends the received state information and individual identification information, as well as a terminal apparatus ID of the mobile apparatus 20 and an operator ID to the server 30.

When the server 30 receives the information from the mobile apparatus 20, the auxiliary information providing unit A refers to installed-apparatus-related data 33a, maintenance-related data 33b, and apparatus-related data 33c stored therein, using the received information, and searches for, extracts, and edits auxiliary information to be provided. Then, auxiliary information corresponding to the state information and the individual identification information is sent to and displayed on the mobile apparatus 20.

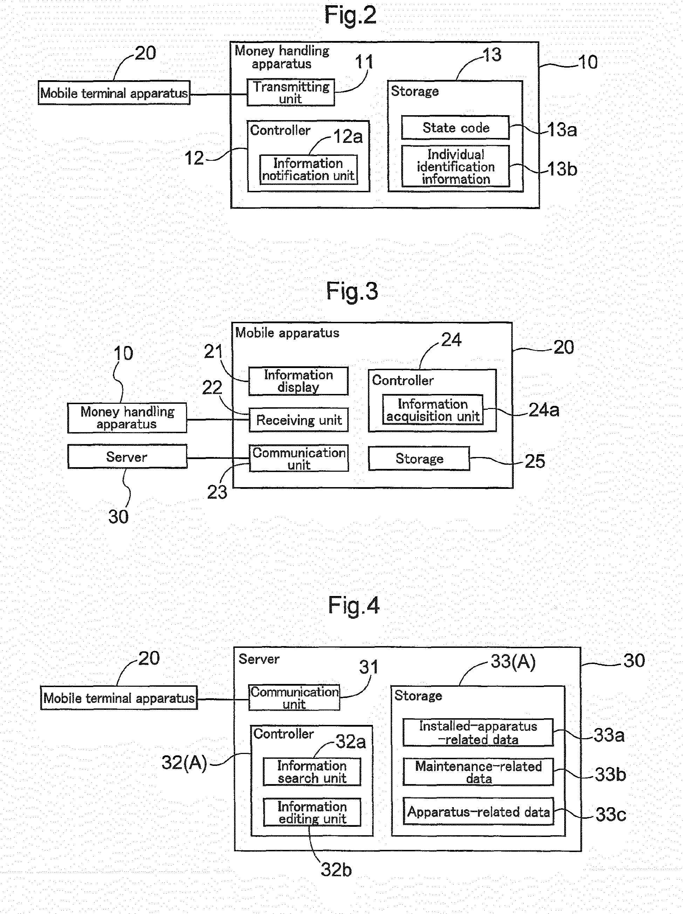

Next, an internal configuration of a money handling apparatus 10 will be described using a block diagram in FIG. 2. The money handling apparatus 10 comprises the transmitting unit 11, a controller 12, and a storage 13. Note that, although the money handling apparatus 10 comprises a mechanism for handling money, an interface that is operated by a user of the apparatus, and the like, their description is omitted.

The transmitting unit 11 is an interface for performing communication with the receiving unit 22 of the mobile apparatus 20 by transmitting signals to the outside. The transmitting unit 11 is controlled by an information notification unit 12a, which will be described later, and transmits signals containing a state code 13a and individual identification information 13b to the outside. In this embodiment, an LED is used as the transmitting unit 11. The state code 13a and the individual identification information 13b are converted into optical signals based on a blinking pattern of the LED, and transmitted to the outside from the transmitting unit 11.

The controller 12 is a controller that controls the notification of information from the money handling apparatus 10 to the mobile apparatus 20, when the state of the money handling apparatus 10 changes, that is, an error occurs therein, or a part thereof is replaced, for example, and has the information notification unit 12a. In practice, programs corresponding to these functional units are stored in a ROM or a non-volatile memory (not shown) and those programs are loaded into a Central Processing Unit (CPU ) and executed to thereby execute processes corresponding to the respective functional units.

The information notification unit 12a controls the transmitting unit 11 and notifies the mobile apparatus 20 of the state information and the individual identification information of the money handling apparatus 10. State information is information that indicates the state of a money handling apparatus 10. Individual identification information is information for individually identifying money handling apparatuses 10, and comprises a model ID and a serial number.

The information notification unit 12a selects an appropriate state code from state codes 13a stored in the storage 13, which will be described later, depending on the state that occurs in the money handling apparatus 10, such as a state in which an error in the mechanism or the like occurs or a state in which a part needs to be replaced. Then, the information notification unit 12a transmits the selected state code and the individual identification information 13b (model ID and serial number) that is also stored in the storage 13 from the transmitting unit 11, and notifies the mobile apparatus 20.

The storage 13 is configured by a storage device such as a Hard Disk Drive (HDD) or a non-volatile Random Access Memory (RAM), and stores the state codes 13a and the individual identification information 13b.

The state codes 13a are codes that indicate various states that may occur in the money handling apparatus 10, such as a state in which an error in the mechanism or the like occurs or a state in which it is time for a part to be replaced. The storage 13 stores a plurality of state codes, and these state codes are assigned in such a manner that one state code indicates one state. The state codes comprise error codes (ER01, ER02, ...) that indicate the types of errors occurring in the money handling apparatus 10 and parts replacement codes (CH01, CH02, ...) that indicate the types of parts for which it is time for replacement. For example, the state code 'ER08' is an error code that indicates Abnormality in lifting operation of Safe 1'.

The individual identification information 13b is, as described above, information for individually identifying money handling apparatuses 10. The model ID is an ID that indicates the model of a money handling apparatus 10. The serial number is a serial number that is assigned to each money handling apparatus 10. For example, the money handling apparatus 10 has the model ID 'MD12' and the serial number '1983', and these data are stored in the storage 13 as the individual identification information 13b.

Next, an internal configuration of the mobile apparatus 20 will be described using a block diagram in FIG. 3. The mobile apparatus 20 comprises an information display 21, the receiving unit 22, a communication unit 23, a controller 24, and a storage 25.

The information display 21 is a device that displays the auxiliary information sent from the server 30 and an inquiry to an operator. In this embodiment, a so-called liquid-crystal touch panel that receives an operation/input from the operator in addition to displaying the above-described information is used as the information display 21.

The receiving unit 22 is an interface that receives signals from the transmitting unit 11 of a money handling apparatus 10. In this embodiment, a camera is used as the receiving unit 22. Optical signals transmitted from the transmitting unit 11 based on a blinking pattern of the LED are received by the camera of the receiving unit 22, and converted into a state code and individual identification information. That is to say, in the money handling system 100 according to this embodiment, the communication between the money handling apparatus 10 and the mobile apparatus 20 is performed through unidirectional communication, that is, sending optical signals from the transmitting unit 11 to the receiving unit 22.

The communication unit 23 is an interface for performing communication with the server 30 via a wireless network such as a wireless LAN.

The controller 24 is a controller that controls the reception of signals from a money handling apparatus 10, the communication with the server 30, the display of the auxiliary information on the information display 21, and the like, and has an information acquiring unit 24a. In practice, programs corresponding to these functional units are stored in a ROM or a non-volatile memory (not shown) and those programs are loaded into the CPU and executed to thereby execute processes corresponding to the respective functional units.

The information acquiring unit 24a controls the communication unit 23 and sends the state code and the individual identification information received from the money handling apparatus 10, as well as the terminal apparatus ID and the operator ID stored in the storage 25 to the server 30. Then, the information acquiring unit 24a receives auxiliary information from the server 30 and displays the received auxiliary information on the information display 21.

The storage 25 is configured by a storage device such as an HDD or a non-volatile RAM, and stores the terminal apparatus ID and the operator ID. A terminal apparatus ID is data for identifying a specific mobile apparatus 20. An operator ID is data for identifying the operator of a mobile apparatus 20, and is input when the operator activates the mobile apparatus 20 and begins to use it.

Next, an internal configuration of the server 30 will be described using a block diagram in FIG. 4. The server 30 comprises a communication unit 31, a controller 32, and a storage 33.

The communication unit 31 is an interface for performing communication with a mobile apparatus 20 via a wireless network such as a wireless LAN.

The storage 33 is configured by a storage device such as an HDD or a non-volatile RAM, and stores the installed-apparatus-related data 33a, the maintenance-related data 33b, and the apparatus-related data 33c.

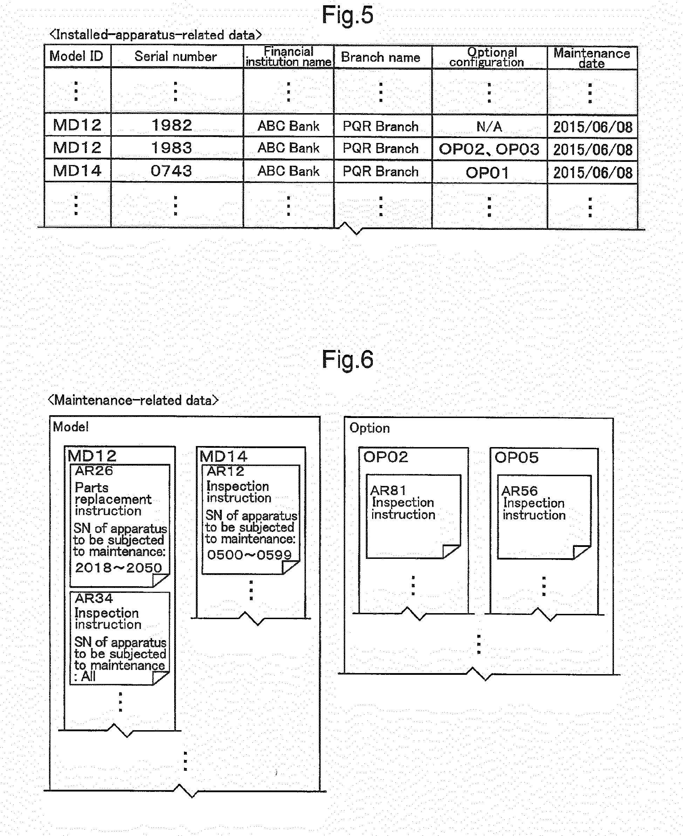

The installed-apparatus-related data 33a comprises apparatus configuration information that indicates the configurations of installed money handling apparatuses 10 in a state in which the apparatus configuration information is associated with the individual identification information. As illustrated in FIG. 5, the installed-apparatus-related data 33a comprises 'Model ID', 'Serial number', "Financial institution name", "Branch name", "Optional configuration", and "Maintenance date".

"Financial institution name" is the name of a financial institution in which a money handling apparatus 10 is installed. "Branch name" is the name of a branch at which a money handling apparatus 10 is installed. "Optional configuration" is a number assigned to an optional apparatus, mechanism, software, or the like that is provided attached to a money handling apparatus 10. "Maintenance date" is the date of the day when maintenance of a money handling apparatus 10 was performed. These data are contained in the installed-apparatus-related data 33a and stored in the storage 33, in a state in which these data correspond to individual money handling apparatuses 10, that is, these data are associated with the "Model ID" and the "Serial number".

The maintenance-related data 33b comprises maintenance information regarding the maintenance of installed money handling apparatuses 10 in a state in which the maintenance information is associated with the individual identification information. As illustrated in FIG. 6, the maintenance-related data 33b comprises document data AR26, document data AR34, and the like. These document data comprised in the maintenance-related data 33b are data that indicate information regarding the maintenance of money handling apparatuses 10, such as a parts replacement instruction and an inspection instruction. Those data (maintenance information) are comprised in the maintenance-related data 33b and stored in the storage 33, in a state which those data are associated with model IDs and serial numbers (SN) so as to correspond to models and apparatuses to be subjected to maintenance.

For example, the document data AR26 is data of a document (text and image) that explains a parts replacement instruction for apparatuses with the model ID "MD12" and respective serial numbers (SN) of "2018" to "2050". The document data AR26 is associated with the model ID "MD12" and the serial numbers "2018 to 2050" and stored in the maintenance-related data 33b. The document data AR34 is data of a document (text and image) that explains an inspection instruction for all of the apparatuses with the model ID "MD12". The document data AR34 is associated with the model ID "MD12" and stored in the maintenance-related data 33b. For example, document data AR81 is data of a document (text and image) that explains an inspection instruction for all of the apparatuses with an optional configuration "OP02", and is associated with the optional configuration "OP02" and stored in the maintenance-related data 33b. Note that the maintenance information is not limited to document data, and may also be moving image data, animation data, or image data.

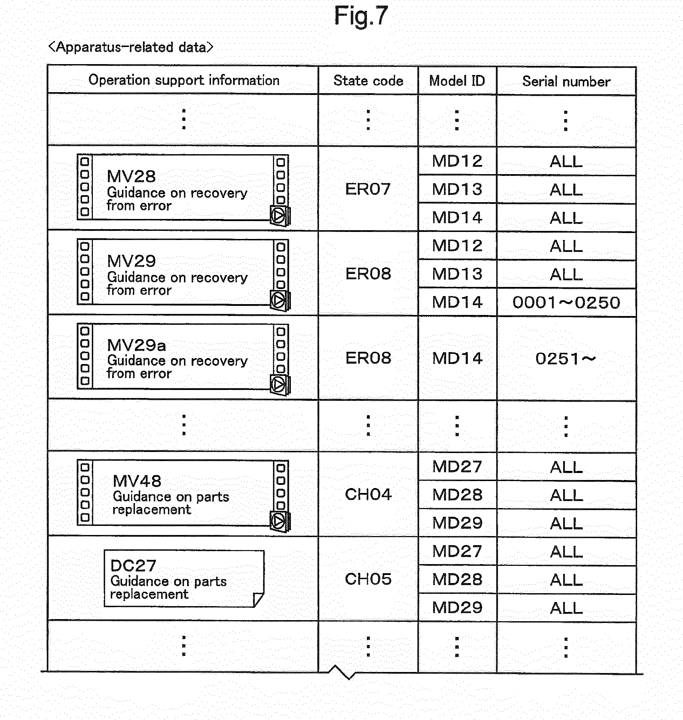

The apparatus-related data 33c contains operation support information that explains an operation method or an error recovery method of money handling apparatuses 10, in a state in which the operation support information is associated with the state information. As illustrated in FIG. 7, the apparatus-related data 33c is data that comprises "Operation support information", "State code", "Model ID", and "Serial number".

"Operation support information" comprises moving image data MV28, document data DC27, and the like. The moving image data and the like comprised in the apparatus-related data 33c are information that explains operation methods, error recovery methods, or parts replacement methods of money handling apparatuses 10, such as an error recovery method or a parts replacement method. These data are comprised in the apparatus-related data 33c and stored in the storage 33, in a state in which these data are associated with state codes, model IDs, and serial numbers so as to correspond to the states, the models, and individual money handling apparatuses 10, of money handling apparatuses 10 for which the operation is to be supported.

For example, moving image data MV29 is data of a moving image that explains the method for recovering from an error indicated by the state code "ER08" (error code), with respect to all of the apparatuses with the model IDs "MD12" and "MD13", and apparatuses with the model ID "MD14" and respective serial numbers of "0001" to "0250". As illustrated in FIG. 7, the moving image data MV29 is associated with the corresponding state code, model IDs, and serial numbers and stored in the apparatus-related data 33c. The document data DC27 is data of a document (text and image) that explains the method for parts replacement indicated by a state code "CH05" (parts replacement code), with respect to all of the apparatuses with the model IDs "MD27", "MD28", and "MD29". As illustrated in FIG. 7, the document data DC27 is associated with the corresponding state code, model IDs, and serial numbers and stored in the apparatus-related data 33c.

The controller 32 is a controller that controls the reception of information from the mobile apparatus 20, the authority checking of the mobile apparatus 20, the sending of auxiliary information to the mobile apparatus 20, the search and editing of auxiliary information, and the like, and has an information search unit 32a and an information editing unit 32b. In practice, programs corresponding to these functional units are stored in a ROM or a non-volatile memory(not shown), and those programs are loaded into a CPU and executed to thereby execute processes corresponding to the respective functional units.

The information search unit 32a searches the data stored in the storage 33, and extracts auxiliary information corresponding to the state information (state code) and the individual identification information (model ID and serial number) sent from the mobile apparatus 20.

For example, with respect to the state code "ER08" (error code), the model ID "MD12", and the serial number "1983", the following data are searched for and extracted. First, "ABC Bank", "PQR Branch", "OP02, OP03", and "2015/06/08" are extracted from the installed-apparatus-related data 33a as data corresponding to "MD12" and "1983" (see FIG. 5). Subsequently, the document data AR34 and AR81 are extracted from the maintenance-related data 33b as data corresponding to "MD12", "1983", and "OP02, OP03" (see FIG. 6). Finally, the moving image data MV29 is extracted from the apparatus-related data 33c as data corresponding to "ER08", "MD12", and "1983" (see FIG. 7).

The information editing unit 32b edits the auxiliary information searched for and extracted by the information search unit 32a, in accordance with the state information and the individual identification information. For example, when a money handling apparatus 10 specified by the individual identification information has an optional apparatus, an explanatory moving image regarding that optional apparatus is added to the data of a moving image that explains an error recovery method. For example, a plurality of pieces of moving image data, document data, and the like searched for and extracted by the information search unit 32a are linked together so as to be viewed continuously. The thus edited auxiliary information is sent to the mobile apparatus 20 by the communication unit 31.

As described above, the storage 33 of the server 30 stores the auxiliary information in a state in which the auxiliary information is associated with the individual identification information and the state information of money handling apparatuses 10. The controller 32 of the server 30 searches for, extracts, and edits the auxiliary information and provides the auxiliary information. In this embodiment, the controller 32 and the storage 33 of the server 30 constitute the auxiliary information providing unit A.

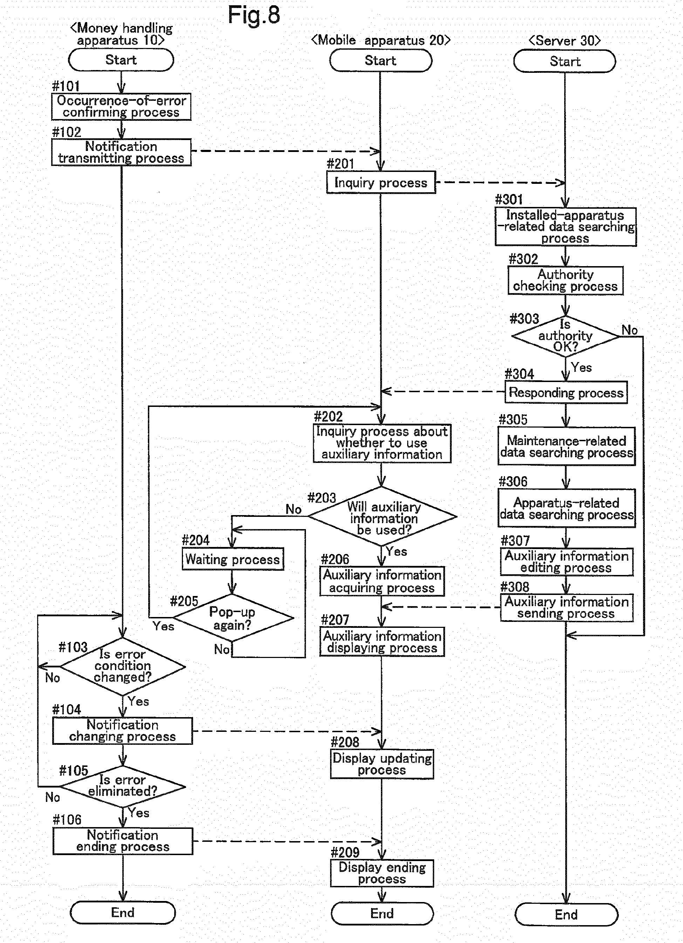

Next, a series of processing steps that are performed in the money handling system 100 will be described with reference to a flow chart in FIG. 8. In the following description, a case in which an error "Abnormality in lifting operation of Safe 1" corresponding to the state code "ER08" occurs in a money handling apparatus 10 with the model ID "MD12" and the serial number "1983" is taken as an example.

When the error "Abnormality in lifting operation of Safe 1" occurs in the money handling apparatus 10, and the controller 12 detects the occurrence of this error, the information notification unit 12a selects the state code "ER08" corresponding to the occurring error out of the state codes 13a stored in the storage 13 (step #101).

Subsequently, the information notification unit 12a of the money handling apparatus 10 transmits the model ID "MD12" and the serial number "1983" stored in the storage 13 and the selected state code "ER08", as optical signals from the transmitting unit 11 (step #102). Note that the transmission of signals from the transmitting unit 11 is continued regardless of the success or failure of reception of the signals by the mobile apparatus 20, and is continued until the error condition in the money handling apparatus 10 is eliminated.

When the mobile apparatus 20 is brought near to the money handling apparatus 10, the receiving unit 22 of the mobile apparatus 20 receives the optical signals from the transmitting unit 11 of the money handling apparatus 10. Then, the information acquiring unit 24a of the mobile apparatus 20 controls the communication unit 23 and sends the state code "ER08", the model ID "MD12", and the serial number "1983", which were received from the money handling apparatus 10, as well as the terminal apparatus ID and the operator ID stored in the storage 25 to the server 30 (step #201)_{∘}

When the communication unit 31 of the server 30 receives the above-described data from the mobile apparatus 20, the information search unit 32a searches the installed-apparatus-related data 33a based on the received model ID "MD12" and serial number "1983", and extracts the financial institution name "ABC Bank", the branch name "PQR Branch", the optional configuration "OP02, OP03", and the maintenance date "2015/06/08", as data corresponding to the received data (step #301).

Subsequently, the controller 32 of the server 30 compares the received terminal apparatus ID and operator ID with the financial institution name "ABC Bank" and the branch name "PQR Branch" corresponding to the received individual identification information, and checks whether or not the mobile apparatus 20 has the authority to display auxiliary information regarding the money handling apparatus 10 with the model ID "MD12"and the serial number "1983" (step #302). If the mobile apparatus 20 does not have the authority (step #303: No), the processing is ended. Note that, in this case, the mobile apparatus 20 may also display an indication to the effect that it does not have the authority to display the auxiliary information.

If the mobile apparatus 20 passes the authority checking (step #303: Yes), the server 30 makes a response to the mobile apparatus 20 to the effect that it permits the mobile apparatus 20 to begin processing for providing the auxiliary information (step #304). The server 30 then begins preparing auxiliary information to be provided to the mobile apparatus 20.

The information search unit 32a of the server 30 searches the maintenance-related data 33b, and extracts the document data AR34 and AR81, which are the maintenance information, as data corresponding to the model ID "MD12", the serial number "1983", and the optional configuration "OP02, OP03" (step #305).

Subsequently, the information search unit 32a of the server 30 searches the apparatus-related data 33c, and extracts the moving image data MV29, which is the operation support information, as data corresponding to the state code "ER08", the model ID "MD12", and the serial number "1983" (step #306).

Subsequently, the information editing unit 32b of the server 30 edits the extracted auxiliary information (moving image data MV29 and document data AR34 and AR81), and prepare the edited auxiliary information as the auxiliary information to be sent to the mobile apparatus 20 (step #307). Then, the information editing unit 32b waits until it receives a request to acquire the auxiliary information, from the mobile apparatus 20.

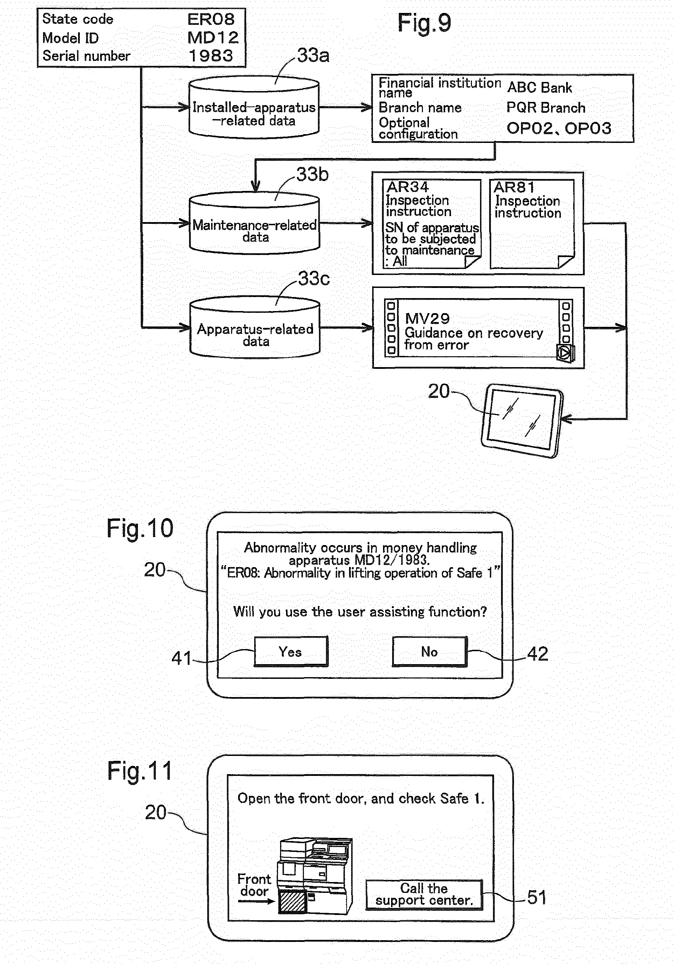

When the mobile apparatus 20 receives a notification from the server 30 to the effect that it is permitted to provide the auxiliary information (step #304), the controller 24 causes the information display 21 to display a pop-up screen that prompts the choice of whether or not to use the auxiliary information. FIG. 10 shows an example of this pop-up screen.

As shown in FIG. 10, buttons 41 and 42 are disposed in the displayed pop-up screen, and the mobile apparatus 20 is in a state in which it waits for an input from the operator (step #203).

If the operator chooses not to use the auxiliary information and presses the button 42 of the pop-up screen (step #203: No), the pop-up screen is closed, and is in a state in which the pop-up screen waits to be displayed again (step #204). For example, the pop-up screen waits in a state in which an icon that, when pressed, displays the pop-up screen is displayed at an end of the screen of the information display 21.

If the operator of the mobile apparatus 20 performs an operation for displaying the pop-up screen again (step #205: Yes), the pop-up screen is displayed, the processing returns to step #202, and the inquiry process about whether to use the auxiliary information is performed again. If the operation for displaying the pop-up screen again is not performed (step #205: No), the processing returns to the waiting state in step #204.

If the operator chooses to use the auxiliary information and presses the button 41 of the pop-up screen (step #203: Yes), the information acquiring unit 24a of the mobile apparatus 20 controls the communication unit 23 and makes a request to the server 30 for the auxiliary information (step #206).

When the server 30 receives the request for the auxiliary information, from the information acquiring unit 24a of the mobile apparatus 20, the auxiliary information providing unit A (controller 32) of the server 30 sends the extracted and edited auxiliary information to the mobile apparatus 20 (step #308).

When the mobile apparatus 20 receives the auxiliary information from the server 30, the received auxiliary information is displayed on the information display 21 (step #207). FIG. 11 shows an example of a screen in which the auxiliary information is displayed on the information display 21. The auxiliary information may be configured such that a button 51 is disposed in the screen that is displayed at this time so as to enable telephonic communication with a support center or the like from the mobile apparatus 20. Moreover, the mobile apparatus 20 may also provide an explanation of the operation by speech through speech synthesis or the like.

If the maintenance work of the money handling apparatus 10 is performed in accordance with the auxiliary information displayed on the mobile apparatus 20, and the error condition of the money handling apparatus 10 is changed (step #103: Yes), the information notification unit 12a of the money handling apparatus 10 changes the state information to be transmitted from the transmitting unit 11 to state information corresponding to the new error condition (step #104). For example, the state code to be transmitted may be changed, or information that indicates the stepwise progress of recovery from the error may be additionally transmitted while the state code is unchanged.

When there is a change in signals from the money handling apparatus 10, the controller 24 of the mobile apparatus 20 updates the auxiliary information to be displayed on the information display 21 of the mobile apparatus 20 (step #208). For example, the displayed moving image, image, or the like may be advanced to the next phase, or auxiliary information corresponding to the changed state information may be acquired from the server 30 and the auxiliary information to be displayed may be updated.

If the error condition of the money handling apparatus 10 is not changed (step #103: No) or if the error condition of the money handling apparatus 10 is not eliminated (step #105: No), the money handling apparatus 10 continues the transmission without making a change in the state information transmitted from the transmitting unit 11.

If the error condition of the money handling apparatus 10 is eliminated (step #105: Yes), the notification of the information from the money handling apparatus 10 to the mobile apparatus 20, that is, the transmission of optical signals from the transmitting unit 11 is ended (step #106). At this time, the transmission of optical signals may be ended after a notification to the effect that the notification of the information will be ended is transmitted from the money handling apparatus 10 to the mobile apparatus 20.

When the mobile apparatus 20 detects that the notification of information, that is, the transmission of optical signals from the money handling apparatus 10 is ended, the mobile apparatus 20 ends the display of the auxiliary information. At this time, the display of the auxiliary information may be ended after undisplayed auxiliary information (e.g., document data regarding an inspection instruction, or the like) is displayed. Then, the processing related to the provision of auxiliary information, in the money handling system 100 is ended.

Next, the search and extraction of auxiliary information that are performed in the server 30 will be described using FIG. 9.

First, the state code "ER08" (error code), which is the state information, and the model ID "MD12" and the serial number "1983", which are the individual identification information, are sent from the mobile apparatus 20 to the server 30. In the server 30, the installed-apparatus-related data 33a, the maintenance-related data 33b, and the apparatus-related data 33c are searched using the sent information.

The installed-apparatus-related data 33a is searched first, and the financial institution name "ABC Bank", the branch name "PQR Branch", the optional configuration "OP02, OP03" (apparatus configuration information), and the maintenance date "2015/06/08" are extracted as information corresponding to the individual identification information.

Subsequently, the maintenance-related data 33b is searched, and the document data AR34 and AR81 are extracted as information corresponding to the individual identification information and the apparatus configuration information.

Subsequently, the apparatus-related data 33c is searched, and the moving image data MV29 is extracted as information corresponding to the state information and the individual identification information.

Then, the extracted moving image data MV29 and document data AR34 and AR81 are sent to the mobile apparatus 20 as auxiliary information. Other Embodiments

In the foregoing embodiment, the communication between the money handling apparatus 10 and the mobile apparatus 20 is performed by sending optical signals from the transmitting unit 11 to the receiving unit 22.

A configuration may be adopted in which the communication between the money handling apparatus 10 and the mobile apparatus 20 is performed by the transmitting unit 11 sending sound wave signals to the receiving unit 22. Specifically, a sound wave generator such as a loudspeaker is employed as the transmitting unit 11 of the money handling apparatus 10, and the state information and the individual identification information are converted into sound wave signals and transmitted from the transmitting unit 11. A sound wave receiver such as a microphone is employed as the receiving unit 22, and the sound wave signals are recorded, and the state information and the individual identification information are reconstructed from the sound wave signals in the controller 24. Note that bidirectional wireless communication via a wireless LAN, Bluetooth, or the like can also be used as the communication between the money handling apparatus 10 and the mobile apparatus 20.

### Industrial Applicability

As described above, the money handling system according to the present invention can provide appropriate information for individual money handling apparatuses and efficiently support the operation of the money handling apparatuses.

### Description of Reference Signs

1: Safe
10: Money handling apparatus
11: Transmitting unit
12: Controller
12a: Information notification unit
13: Storage
13a: State code
13b: Individual identification information
20: Mobile apparatus
21: Information display
22: Receiving unit
23: Communication unit
24: Controller
24a: Information acquiring unit
25: Storage
30: Server
31: Communication unit
32: Controller
32a: Information search unit
32b: Information editing unit
33: Storage
33a: Installed-apparatus-related data
33b: Maintenance-related data
33c: Apparatus-related data
41: Button
42: Button
51: Button
100: Money processing system
A: Auxiliary information providing unit

## Claims

1. A money handling system (100) comprising:
a money handling apparatus (10) configured to handle money;
a mobile apparatus (20) configured to communicate with the money handling apparatus; and
a server (30) configured to communicate with the mobile apparatus, the server including an auxiliary information providing unit (A) configured to provide auxiliary information that assists operation of the money handling apparatus,
wherein the money handling apparatus comprises:
a first interface (11) for communicating with the mobile apparatus;
a first storage (13) configured to store a plurality of state codes (13a) which indicate various states that may occur in the money handling apparatus, and individual identification information (13b) for identifying the money handling apparatus;
an information notification unit (12a) configured to transmit first information to the mobile apparatus, the first information including state information including a state code selected depending on a state generated in the money handling apparatus, from among the plurality of state codes stored in the first storage and the individual identification information stored in the first storage; and
the mobile apparatus comprises:
a second interface (22, 23) for communicating with the money handling apparatus and with the server,
an information display (21) configured to display information,
a second storage (25) configured to store first data for identifying an individual mobile apparatus and second data for identifying an operator,
an information acquisition unit (24a) configured to transmit to the server the first information received from the information notification unit of the money handling apparatus and the first data and the second data stored in the second storage, and receive from the server auxiliary information that assists operation of the money handling apparatus,
the server comprising:
a third interface (31) configured to receive the first information, the first data and the second data from the mobile apparatus and to transmit the auxiliary information to the mobile apparatus,
a third storage (33) configured to store the auxiliary information which is associated with the individual identification information and the state information of the money handling apparatus; and
a control unit (32) configured to extract auxiliary information from among the auxiliary information stored in the third storage, in association with the individual identification information of the money handling apparatus and the state information included in the first information received from the mobile apparatus, and to edit the extracted auxiliary information,
wherein the control unit is configured to check whether or not the mobile apparatus has an authority to display, on the information display, the auxiliary information regarding the money handling apparatus (10) with the individual identification information stored in the first storage, and the mobile apparatus is configured to receive the auxiliary information edited by the control unit from the server and to display the received auxiliary information on the information display if the mobile apparatus passes the authority checking, and
wherein when the mobile apparatus does not pass the authority checking by the server, the server is configured to stop processing for providing auxiliary information to the mobile apparatus.

2. The money handling system (100) according to claim 1,
wherein when the mobile apparatus does not pass the authority checking by the server, the mobile apparatus is configured to display, on the information display, an indication that the mobile apparatus has no authority to display the auxiliary information on the information display of the mobile apparatus.

3. The money handling system (100) according to claim 1,
wherein the third storage (33) of the server (30) is configured to store apparatus-related data (33c) as the auxiliary information, and
the apparatus-related data comprises operation support information that explains an operation method or an error recovery method of the money handling apparatus (10), in a state in which the operation support information is associated with the state information.

4. The money handling system (100) according to any one of claims 1 to 3,
wherein the third storage (33) of the server (30) is configured to store installed-apparatus-related data (33a) as the auxiliary information, and
the installed-apparatus-related data comprises apparatus configuration information that indicates a configuration of the installed money handling apparatus (10), in a state in which the apparatus configuration information is associated with the individual identification information.

5. The money handling system (100) according to any one of claims 1 to 4,
wherein the third storage (33) of the server (30) is configured to store maintenance-related data (33b) as the auxiliary information, and
the maintenance-related data comprises maintenance information regarding maintenance of the installed money handling apparatus (10), in a state in which the maintenance information is associated with the individual identification information.

6. The money handling system (100) according to any one of claims 1 to 5,
wherein the state information comprises an error code that indicates the type of an error occurring in the money handling apparatus (10).

7. The money handling system (100) according to any one of claims 1 to 6,
wherein the individual identification information comprises a model ID that indicates the model of the money handling apparatus (10) and a serial number of the money handling apparatus.

8. The money handling system (100) according to any one of claims 1 to 7,
wherein the first interface (11) of the money handling apparatus (10) is a transmitting unit (11) configured to transmit a signal containing the state information and the individual identification information to the outside,
the second interface (22, 23) of the mobile apparatus (20) is a receiving unit (22) configured to receive the signal from the transmitting unit, and
the communication between the money handling apparatus and the mobile apparatus is performed through unidirectional communication from the transmitting unit to the receiving unit.

9. The money handling system (100) according to any one of claims 1 to 8,
wherein the money handling apparatus (10) is configured to communicate with the mobile apparatus (20) via a network, and the mobile apparatus is configured to communicate with the server (30) via a network.

10. The money handling system (100) according to claim 1,
wherein the state includes an error state, and
when the error state of the money handling apparatus changes, the information notification unit of the money handling apparatus is configured to change the state code corresponding to the changed state of the money handling apparatus and to transmit to the mobile apparatus the first information including the state information on the changed state code.

## Patentansprüche

1. Geldhandhabungssystem (100), aufweisend:
eine Geldhandhabungsvorrichtung (10), die konfiguriert ist, um Geld zu handhaben;
eine mobile Vorrichtung (20), die konfiguriert ist, um mit der Geldhandhabungsvorrichtung zu kommunizieren; und
einen Server (30), der konfiguriert ist, um mit der mobilen Vorrichtung zu kommunizieren, wobei der Server eine Hilfsinformationsbereitstellungseinheit (A) enthält, die konfiguriert ist, um Hilfsinformationen bereitzustellen, die den Betrieb der Geldhandhabungsvorrichtung unterstützen,
wobei die Geldhandhabungsvorrichtung aufweist:
eine erste Schnittstelle (11) zum Kommunizieren mit der mobilen Vorrichtung;
einen ersten Speicher (13), der konfiguriert ist, um mehrere Zustandscodes (13a), die verschiedene Zustände angeben, die in der Geldhandhabungsvorrichtung auftreten können, und individuelle Identifikationsinformationen (13b) zum Identifizieren der Geldhandhabungsvorrichtung zu speichern;
eine Informationsbenachrichtigungseinheit (12a), die konfiguriert ist, um erste Informationen aus den mehreren im ersten Speicher gespeicherten Zustandscodes und den im ersten Speicher gespeicherten individuellen Identifikationsinformationen an die mobile Vorrichtung zu übermitteln, wobei die ersten Informationen Zustandsinformationen einschließlich eines Zustandscodes, der in Abhängigkeit von einem in der Geldhandhabungsvorrichtung erzeugten Zustand ausgewählt wird, beinhalten; und
die mobile Vorrichtung aufweist:
eine zweite Schnittstelle (22, 23) zum Kommunizieren mit der Geldhandhabungsvorrichtung und mit dem Server,
eine Informationsanzeige (21), die konfiguriert ist, um Informationen anzuzeigen, einen zweiten Speicher (25), der konfiguriert ist, um erste Daten zum Identifizieren einer individuellen mobilen Vorrichtung und zweite Daten zum Identifizieren eines Bedieners zu speichern,
eine Informationsgewinnungseinheit (24a), die konfiguriert ist, um die von der Informationsbenachrichtigungseinheit der Geldhandhabungsvorrichtung empfangenen ersten Information und die im zweiten Speicher gespeicherten ersten Daten und zweiten Datensind an den Server zu übermitteln und Hilfsinformationen, die den Betrieb der Geldhandhabungsvorrichtung unterstützen, vom Server zu empfangen,
wobei der Server aufweist:
eine dritte Schnittstelle (31), die konfiguriert ist, um die ersten Informationen, die ersten Daten und die zweiten Daten von der mobilen Vorrichtung zu empfangen und die Hilfsinformationen an die mobile Vorrichtung zu übermitteln,
einen dritten Speicher (33), der konfiguriert ist, um die Hilfsinformationen zu speichern, die mit den individuellen Identifikationsinformationen und den Zustandsinformationen der Geldhandhabungsvorrichtung verbunden sind; und
eine Steuereinheit (32), die konfiguriert ist, um Hilfsinformationen aus den im dritten Speicher gespeicherten Hilfsinformationen in Verbindung mit den individuellen Identifikationsinformationen der Geldhandhabungsvorrichtung und
den Zustandsinformationen, die in den ersten Informationen beinhaltet sind, die von der mobilen Vorrichtung empfangen werden, zu extrahieren und die extrahierten Hilfsinformationen zu editieren,
wobei die Steuereinheit konfiguriert ist, um zu prüfen, ob die mobile Vorrichtung eine Autorität hat oder nicht, um auf der Informationsanzeige die Hilfsinformationen betreffend die Geldhandhabungsvorrichtung (10) mit den im ersten Speicher gespeicherten individuellen Identifikationsinformationen anzuzeigen, und die mobile Vorrichtung konfiguriert ist, um die von der Steuereinheit editierten Hilfsinformationen vom Server zu empfangen und die empfangenen Hilfsinformationen auf der Informationsanzeige anzuzeigen, wenn die mobile Vorrichtung die Autoritätsprüfung besteht, und
wobei, wenn die mobile Vorrichtung die Autoritätsprüfung durch den Server nicht besteht, der Server konfiguriert ist, um die Verarbeitung zum Bereitstellen von Hilfsinformationen an die mobile Vorrichtung zu stoppen.

2. Geldhandhabungssystem (100) nach Anspruch 1, bei welchem, wenn die mobile Vorrichtung die Autoritätsprüfung durch den Server nicht besteht, die mobile Vorrichtung konfiguriert ist, auf der Informationsanzeige einen Hinweis anzuzeigen, dass die mobile Vorrichtung keine Autorität hat, die Hilfsinformationen auf der Informationsanzeige der mobilen Vorrichtung anzuzeigen.

3. Geldhandhabungssystem (100) nach Anspruch 1, bei welchem der dritte Speicher (33) des Servers (30) konfiguriert ist, um vorrichtungsbezogene Daten (33c) als die Hilfsinformationen zu speichern, und
die vorrichtungsbezogenen Daten in einem Zustand, in dem Betriebsunterstützungsinformationen mit den Zustandsinformationen verbunden sind, die Betriebsunterstützungsinformationen aufweisen, die ein Betriebsverfahren oder ein Fehlerbehebungsverfahren der Geldhandhabungsvorrichtung (10) erklären.

4. Geldhandhabungssystem (100) nach einem der Ansprüche 1 bis 3, bei welchem der dritte Speicher (33) des Servers (30) konfiguriert ist, um auf installierte Vorrichtungen bezogene Daten (33a) als die Hilfsinformation zu speichern, und die auf installierte Vorrichtungen bezogenen Daten in einem Zustand, in dem Vorrichtungskonfigurationsinformationen mit den individuellen Identifikationsinformationen verbunden sind, die Vorrichtungskonfigurationsinformationen aufweisen, die eine Konfiguration der installierten Geldhandhabungsvorrichtung (10) angeben.

5. Geldhandhabungssystem (100) nach einem der Ansprüche 1 bis 4, bei welchem der dritte Speicher (33) des Servers (30) konfiguriert ist, um wartungsbezogene Daten (33b) als die Hilfsinformationen zu speichern, und
die wartungsbezogenen Daten Wartungsinformationen betreffend die Wartung der installierten Geldhandhabungsvorrichtung (10) in einem Zustand aufweisen, in dem die Wartungsinformationen mit den individuellen Identifikationsinformationen verbunden sind.

6. Geldhandhabungssystem (100) nach einem der Ansprüche 1 bis 5, bei welchem die Zustandsinformationen einen Fehlercode aufweisen, der die Art eines Fehlers angibt, der in der Geldhandhabungsvorrichtung (10) auftritt.

7. Geldhandhabungssystem (100) nach einem der Ansprüche 1 bis 6, bei welchem die individuellen Identifikationsinformationen eine Modell-ID aufweisen, die das Modell der Geldhandhabungsvorrichtung (10) und eine Seriennummer der Geldhandhabungsvorrichtung angibt.

8. Geldhandhabungssystem (100) nach einem der Ansprüche 1 bis 7, bei welchem die erste Schnittstelle (11) der Geldhandhabungsvorrichtung (10) eine Sendeeinheit (11) ist, die konfiguriert ist, um ein Signal, das die Zustandsinformationen und die individuellen Identifikationsinformationen enthält, nach außen zu senden, die zweite Schnittstelle (22, 23) der mobilen Vorrichtung (20) eine Empfangseinheit (22) ist, die konfiguriert ist, um das Signal von der Sendeeinheit zu empfangen, und
die Kommunikation zwischen der Geldhandhabungsvorrichtung und der mobilen Vorrichtung durch eine unidirektionale Kommunikation von der Sendeeinheit zur Empfangseinheit durchgeführt wird.

9. Geldhandhabungssystem (100) nach einem der Ansprüche 1 bis 8, bei welchem die Geldhandhabungsvorrichtung (10) konfiguriert ist, um über ein Netzwerk mit der mobilen Vorrichtung (20) zu kommunizieren, und die mobile Vorrichtung konfiguriert ist, um über ein Netzwerk mit dem Server (30) zu kommunizieren.

10. Geldhandhabungssystem (100) nach Anspruch 1, bei welchem der Zustand einen Fehlerzustand beinhaltet, und
wenn sich der Fehlerzustand der Geldhandhabungsvorrichtung ändert, die Informationsbenachrichtigungseinheit der Geldhandhabungsvorrichtung konfiguriert ist, um den Zustandscode entsprechend dem geänderten Zustand der Geldhandhabungsvorrichtung zu verändern und an die mobile Vorrichtung die ersten Informationen einschließlich der Zustandsinformationen auf dem geänderten Zustandscode zu übermitteln.

## Revendications

1. Système de manipulation d'argent (100) comprenant :
un appareil de manipulation d'argent (10) configuré pour manipuler de l'argent ;
un appareil mobile (20) configuré pour communiquer avec l'appareil de manipulation d'argent ; et
un serveur (30) configuré pour communiquer avec l'appareil mobile, le serveur incluant une unité de fourniture d'informations auxiliaires (A) configurée pour fournir des informations auxiliaires qui aident au fonctionnement de l'appareil de manipulation d'argent,
dans lequel l'appareil de manipulation d'argent comprend :
une première interface (11) servant à communiquer avec l'appareil mobile ;
un premier moyen de stockage (13) configuré pour stocker une pluralité de codes d'état (13a) qui indiquent divers états qui peuvent se produire dans l'appareil de manipulation d'argent, et des informations d'identification individuelle (13b) servant à identifier l'appareil de manipulation d'argent ;
une unité de notification d'informations (12a) configurée pour transmettre des premières informations à l'appareil mobile, les premières informations incluant des informations d'état incluant un code d'état sélectionné, en fonction d'un état généré dans l'appareil de manipulation d'argent, parmi la pluralité de codes d'état stockés dans le premier moyen de stockage et les informations d'identification individuelle stockées dans le premier moyen de stockage, et
dans lequel l'appareil mobile comprend :
une deuxième interface (22, 23) servant à communiquer avec l'appareil de manipulation d'argent et avec le serveur ;
un affichage d'informations (21) configuré pour afficher des informations ;
un deuxième moyen de stockage (25) configuré pour stocker des premières données servant à identifier un appareil mobile individuel et des deuxièmes données servant à identifier un opérateur ;
une unité d'acquisition d'informations (24a) configurée pour transmettre au serveur les premières informations reçues de l'unité de notification d'informations de l'appareil de manipulation d'argent et les premières et deuxièmes données stockées dans le deuxième moyen de stockage, et pour recevoir du serveur des informations auxiliaires qui aident au fonctionnement de l'appareil de manipulation d'argent,
le serveur comprenant :
une troisième interface (31) configurée pour recevoir les premières informations, les premières données, et les deuxièmes données issues de l'appareil mobile, et pour transmettre les informations auxiliaires à l'appareil mobile ;
un troisième moyen de stockage (33) configuré pour stocker des informations auxiliaires qui sont associées aux informations d'identification individuelle et aux informations d'état de l'appareil de manipulation d'argent ; et
une unité de contrôle (32) configurée pour extraire des informations auxiliaires parmi les informations auxiliaires stockées dans le troisième moyen de stockage, en association avec les informations d'identification individuelle de l'appareil de manipulation d'argent et les informations d'état inclues dans les premières informations reçues de l'appareil mobile, et pour éditer les informations auxiliaires extraites,
dans lequel l'unité de contrôle est configurée pour vérifier si oui ou non l'appareil mobile a une autorité pour afficher, sur l'affichage d'informations, les informations auxiliaires concernant l'appareil de manipulation d'argent (10) avec les informations d'identification individuelle stockées dans le premier moyen de stockage, et dans lequel l'appareil mobile est configuré pour recevoir les informations auxiliaires éditées par l'unité de contrôle du serveur et pour afficher les informations auxiliaires reçues sur l'affichage d'informations si l'appareil mobile réussit la vérification d'autorité, et
dans lequel, lorsque l'appareil mobile ne réussit pas la vérification d'autorité par le serveur, le serveur est configuré pour arrêter le traitement servant à fournir des informations auxiliaires à l'appareil mobile.

2. Système de manipulation d'argent (100) selon la revendication 1,
dans lequel, lorsque l'appareil mobile ne réussit pas la vérification d'autorité par le serveur, l'appareil mobile est configuré pour afficher, sur l'affichage d'informations, une indication que l'appareil mobile n'a pas d'autorité à afficher les informations auxiliaires sur l'affichage d'informations de l'appareil mobile.

3. Système de manipulation d'argent (100) selon la revendication 1,
dans lequel le troisième moyen de stockage (33) du serveur (30) est configuré pour stocker des données relatives à l'appareil (33c) en tant qu'informations auxiliaires, et
dans lequel les données relatives à l'appareil comprennent des informations de support de fonctionnement qui expliquent un procédé de fonctionnement ou un procédé de récupération d'erreur de l'appareil de manipulation d'argent (10), dans un état dans lequel les informations de support de fonctionnement sont associées aux informations d'état.

4. Système de manipulation d'argent (100) selon l'une quelconque des revendications 1 à 3,
dans lequel le troisième moyen de stockage (33) du serveur (30) est configuré pour stocker des données relatives à l'appareil installé (33a) en tant qu'informations auxiliaires, et
dans lequel les données relatives à l'appareil installé comprennent des informations de configuration d'appareil qui indiquent une configuration de l'appareil de manipulation d'argent (10) installé, dans un état dans lequel les informations de configuration de l'appareil sont associées aux informations d'identification individuelle.

5. Système de manipulation d'argent (100) selon l'une quelconque des revendications 1 à 4,
dans lequel le troisième moyen de stockage (33) du serveur (30) est configuré pour stocker des données relatives à la maintenance (33b) en tant qu'informations auxiliaires, et
dans lequel les données relatives à la maintenance comprennent des informations de maintenance concernant la maintenance de l'appareil de manipulation d'argent (10) installé, dans un état dans lequel les informations de maintenance sont associées aux informations d'identification individuelle.

6. Système de manipulation d'argent (100) selon l'une quelconque des revendications 1 à 5,
dans lequel les informations d'état comprennent un code d'erreur qui indique le type d'erreur se produisant dans l'appareil de manipulation d'argent (10).

7. Système de manipulation d'argent (100) selon l'une quelconque des revendications 1 à 6,
dans lequel les informations d'identification individuelle comprennent un modèle d'ID qui indique le modèle de l'appareil de manipulation d'argent (10) et un numéro de série de l'appareil de manipulation d'argent.

8. Système de manipulation d'argent (100) selon l'une quelconque des revendications 1 à 7,
dans lequel la première interface (11) de l'appareil de manipulation d'argent (10) est une unité de transmission (11) configurée pour transmettre un signal contenant les informations d'état et les informations d'identification individuelle vers l'extérieur,
dans lequel la deuxième interface (22, 23) de l'appareil mobile (20) est une unité de réception (22) configurée pour recevoir le signal de l'unité de transmission, et
dans lequel la communication entre l'appareil de manipulation d'argent et l'appareil mobile est effectuée par une communication unidirectionnelle en partant de l'unité de transmission vers l'unité de réception.

9. Système de manipulation d'argent (100) selon l'une quelconque des revendications 1 à 8,
dans lequel l'appareil de manipulation d'argent (10) est configuré pour communiquer avec l'appareil mobile (20) via un réseau, et l'appareil mobile est configuré pour communiquer avec le serveur (30) via un réseau.

10. Système de manipulation d'argent (100) selon la revendication 1,
dans lequel l'état inclut un état d'erreur, et
lorsque l'état d'erreur de l'appareil de manipulation d'argent change, l'unité de notification d'informations de l'appareil de manipulation d'argent est configurée pour changer le code d'état correspondant à l'état changé de l'appareil de manipulation d'argent et pour transmettre à l'appareil mobile les premières informations incluant les informations d'état sur le code d'état changé.
